# EUROPEAN PATENT APPLICATION

(11) **EP 3 632 516 A1**
(43) Date of publication of application: **08.04.2020**
(21) Application number: 18806296.2
(22) Date of filing: 24.04.2018
(51) Int. Cl.: A63F 9/00, A63F 7/30, A63F 9/24

(54) **PUNCHING GAME APPARATUS**

(30) Priority: 23.05.2017 KR 20170002511 U
(71) Applicant: Samjin International Co., Ltd, Seoul 08390 (KR)
(72) Inventor: JUNG, Byeong Hun, Seoul 08050 (KR)
(74) Representative: Zacco Sweden AB
(86) International application number: PCT/KR2018/004724
(87) International publication number: WO 2018/216910

(57) **Abstract**

The present invention relates to a punching game apparatus and, more particularly, to a punching game apparatus which converts a moving time of a hitting part into a score and outputs the score to a scoreboard. The present invention may increase the interest in a game by converting the moving time of a shift at the time of hitting by means of a sensor to accurately score the hitting power of a user. The present invention can increase the interest by accumulating the score converted from the hitting power and allowing users to compete for the highest score through score recording. In addition, as the present invention allows a game to be played with the hitting power of a finger, unlike conventional punching game apparatuses, the punching game apparatus is small in size and thus easy to carry. Moreover, since an conventional punching game can be played with a finger, the present invention may stir up the interest in the game. Furthermore, the present invention is provided with a restart button, thereby allowing users to easily restart a game.

## Description

### [Technical Field]

The present invention relates to a punching game apparatus; and, more particularly, to a punching game apparatus that converts a moving time of a hitting part into a score and outputs the score to a scoreboard.

### [Background Art]

Generally, a punching game apparatus converts a user's hitting power into a score. Such a punching game apparatus includes a hitting part to which a user's hitting power is applied, a control unit for converting a pressure applied to the hitting part into a score, and a display unit for displaying a converted score. With this configuration, conventional punching game apparatuses convert hitting powers of users into scores and ranking the scores, thereby increasing the interest in a game.

However, in the above-described conventional punching game apparatuses, the hitting power applied to the hitting part is converted into the score simply by detecting the pressure applied to the hitting part and, thus, the converted score does not accurately reflect the hitting power. As a result, the interest in the game decreases.

### [Detailed Description on the Invention]

### [Technical Problem]

The present invention provides a finger punching game apparatus capable of increasing the interest in a game by accurately converting a hitting power applied to a hitting part by a finger into a score.

### [Technical Solution]

In order to achieve the above object, the present invention provides a punching game apparatus including: a hitting part to which a hitting power from a user's finger is applied; a sensor unit configured to output a first sensor information when the hitting part is positioned at one point and output a second sensor information when the hitting part is positioned at the other point by the hitting power of the user; and a control unit configured to convert a difference between an output time of the first sensor information and an output time of the second sensor information into a score.

The hitting part includes: a punching pad to which a hitting power of the user is applied; and a shaft connected to the punching pad, wherein the shaft has a linear shape or a bent bracket shape.

The sensor unit includes: a first sensor configured to detect that the shaft is positioned at one point; and a second sensor configured to detect that the shaft is positioned at the other point. The sensor unit includes an infrared ray sensor.

The punching game apparatus further includes a restart button configured to return the hitting part to an original position. The control unit accumulates converted scores and displays the accumulated scores on a display unit.

### [Advantageous Effect]

The present invention can accurately score a user's hitting power by converting a moving time of a shaft at the time of hitting into a score by using a sensor, thereby increasing the interest in a game.

Further, the present invention can accumulate the scores converted from the hitting power and allow users to compete for the highest score through score recording, thereby increasing the interest in a game.

Moreover, the present invention allows a game to be played with a hitting power of a finger, unlike conventional punching game apparatuses. Accordingly, the punching game apparatus of the present invention is small in size and thus easy to carry. Since a conventional punching game can be played with a finger, the interest in the game can be stirred up.

Furthermore, the present invention is provided with a restart button so that a game can be easily restarted.

### [BRIEF DESCRIPTION OF THE DRAWINGS]

Fig. 1 is a schematic perspective view of a punching game apparatus according to the present invention.
Fig. 2 shows the inside of the punching game apparatus according to the present invention.
Figs. 3 to 6 are conceptual diagrams for explaining how to sense the shaft of the punching game apparatus according to the present invention.

### [Best Mode for the Invention]

Hereinafter, embodiments of the present invention will be described in detail with reference to the accompanying drawings. Like reference numerals designate like parts throughout the drawings.

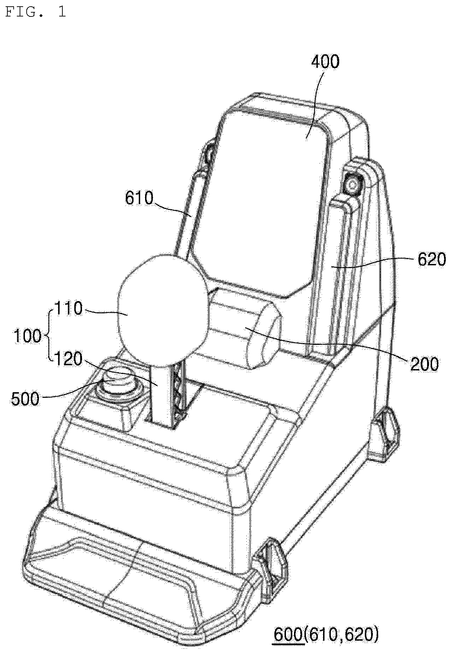

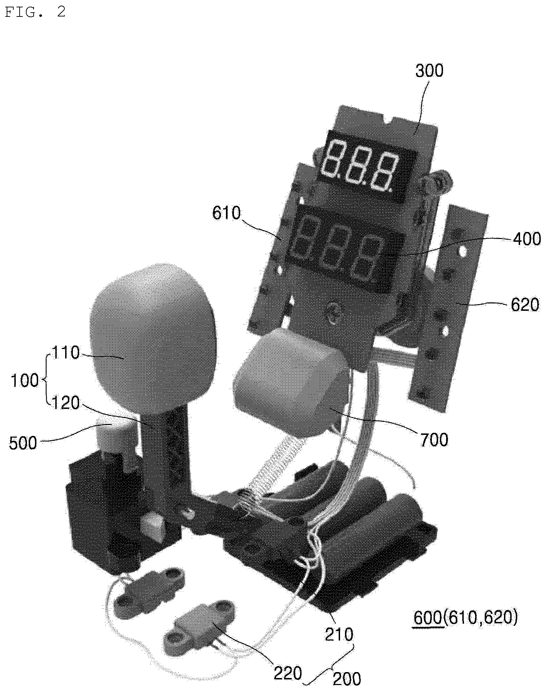

Fig. 1 is a schematic perspective view of a punching game apparatus according to the present invention. Fig. 2 shows the inside of the punching game apparatus according to the present invention.

As shown in Figs. 1 and 2, the punching game apparatus according to the present invention includes a hitting part 100, a sensor unit 200 for detecting movement of the hitting part 100, a control unit 300 for converting a moving time of the hitting part into a score based on the information detected by the sensor unit 200 to display the score, and a display unit for displaying the score converted by the control unit 300.

The hitting part 100 to which a user's hitting power is applied includes a punching pad 110 to which the hitting power of the user is directly applied, and a shaft 120 connected to the punching pad 110.

The hitting power of the user is directly applied to the punching pad 110. Here, the punching game apparatus in accordance with the present invention allows a user to hit the punching pad 110 with a finger, instead of a fist. Therefore, the punching pad 110 should protect a user's finger at the time of hitting as well as sufficiently transmit the hitting power. Accordingly, the punching pad 110 is preferably made of a material that can absorb a user's hitting power, e.g., sponge or the like. The punching pad 110 has a predetermined thickness and a round front surface in order to sufficiently transmit the user's hitting power while protecting the user's finger from injury. Further, the punching pad 110 has a flat rear surface so that the impact applied to the punching pad 110 can be sufficiently absorbed by an impact absorbing part 700.

The shaft 120 is connected to the punching pad 110 and directly used for measuring a moving time of the hitting part 100 by the sensor unit 200 to be described later. The shaft 120 can be formed in a linear rod shape. However, the shape of the shaft 120 of the present invention is not limited thereto, and may be a bent bracket shape as shown in Fig. 2.

The sensor unit 200 measures a moving time of the shaft 120 when the impact is applied to the punching pad 110. Therefore, the sensor unit 200 includes a first sensor 210 for detecting the shaft 120 positioned at one point, and a second sensor 220 for detecting the shaft 120 that has moved to other point after the impact.

The first sensor 210 detects the shaft 120 positioned at one point, which may include, e.g., an infrared ray (IR) sensor. The present invention may employ another sensor having a similar function, instead of the IR sensor, as the first sensor 210. The first sensor 210 includes: a first light emitting part that emits infrared rays; and a first light receiving part that is separated from the first light emitting part and receives the infrared rays emitted from the first light emitting part. Here, the shaft 120 positioned at one point is disposed between the first light emitting part and the first light receiving part. Accordingly, the light emitted from the first light emitting part is not received by the first light receiving part, which makes it possible to detect that the shaft 120 is positioned at one point. When the first sensor 210 detects that the shaft 120 is positioned at one point, i.e., when the light is not received by the first light receiving part, the first sensor information is outputted.

The second sensor 220, which is the same as the first sensor 210, includes an IR sensor. The second sensor 220 is separated from the first sensor 210, and includes a second light emitting part and a second light receiving part. Here, the shaft 120 that has moved to the other point by the hitting is disposed between the second light emitting part and the second light receiving part. Accordingly, the second sensor 220 can detect that the shaft 120 has moved to the other point. When the light is not received by the second light receiving part, the second sensor information is outputted.

The control unit 300 calculates a moving time of the shaft 120 from one point to the other point based on the information detected by the sensor unit 200, i.e., the first sensor information and the second sensor information. Then, the control unit 300 converts the moving time into a score to display. Therefore, the control unit 300 includes a score conversion module for converting the moving time of the shaft 120 into a score based on the first sensor information and the second sensor information, a score display module for displaying the score converted by the score conversion module, and a hitting detection module for detecting whether or not the hitting part 100 has been hit.

The score conversion module calculates the score based on the first sensor information and the second sensor information. A difference between a time at which the first sensor information is received by the score conversion module and a time at which the second sensor information is received by the score conversion module can be calculated as the score. In other words, the present invention calculates the moving time of the shaft 120 from one point to the other point as the score. Accordingly, the score conversion module calculates the difference between a time at which the first sensor information is received by the score conversion module and a time at which the second sensor information is received by the score conversion module as the score. The converted score becomes lower as the difference between the time at which the first sensor information is received and the time at which the second sensor information is received becomes greater, and becomes higher as the difference therebetween becomes smaller. Here, the score can be converted into a value from 0 to 999, for example.

The hitting detection module detects whether or not the shaft 120 was accurately hit. The heating detection module detects the case in which the shaft 210 was not moved from the first sensor 210 to the second sensor 220 due to weak or inaccurate hitting. In other words, the hitting detection module considers the case in which the shaft 120 was not detected by the first sensor 210 due to the hitting and did not reach the second sensor 220 so that it was not detected by the second sensor 220, as a hitting failure. Here, the present invention can consider the case in which the shaft 120 does not reach the second sensor 220 a predetermined number of times, e.g., three times or more, as a hitting failure. When the hitting failure occurs, the current game is determined to be a failure and does not affect the highest store that was previously measured, accumulated, and displayed.

The score display module transmits the score converted by the score conversion module to the display unit 400 so that the score can be visually displayed on the display unit 400. Here, the score display module displays on the display unit 400 the score measured after the punching game apparatus is turned on. The higher stores are displayed on the upper side. The scores are initialized when the power is turned off and back on.

The display unit 400 displays the score under the control of the score display module. At this time, the display unit 400 can use a light emitting diode, e.g., Digit 7 segment LED, as a scoreboard.

However, the present invention is not limited thereto. The punching game apparatus may further include a lamp 600 so that the score display module can visually display the scored on the lamp 600.

The lamp 600 is turned on from the lower side to the upper side according to the scores and visually displays the scores. The lamp 600 can be implemented as two lamps, i.e., a first lamp 610 and a second lamp 620, provided at both sides of the front surface of the punching game apparatus according to the present invention. The number of the lamps 600 may be one, or more than three. The lamp 600 may have a V shape, other than a linear shape.

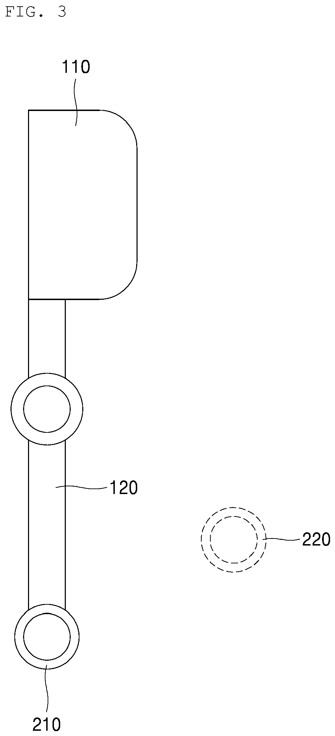

Figs. 3 to 6 are conceptual diagrams for explaining shaft sensing of the punching game apparatus according to the present invention.

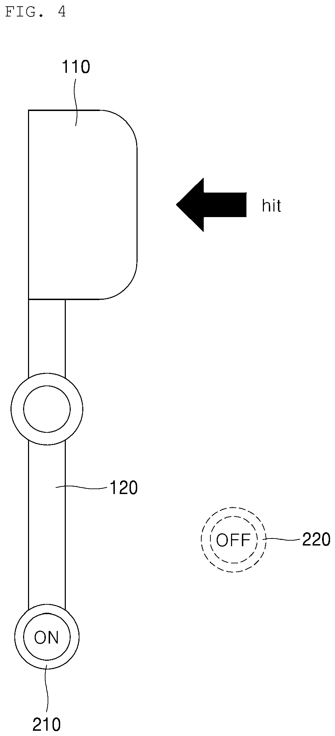

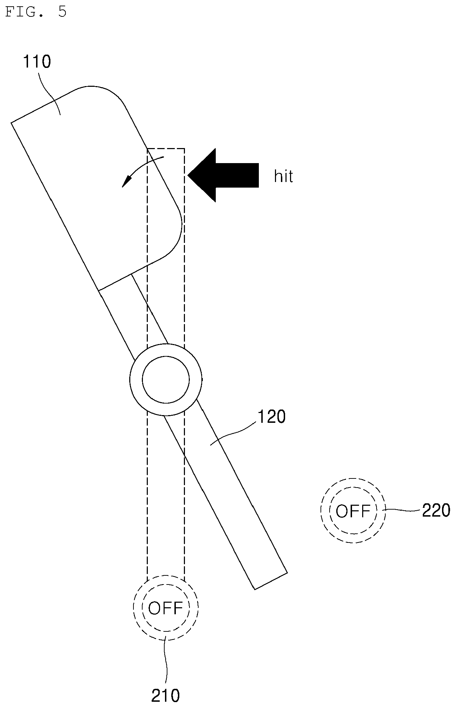

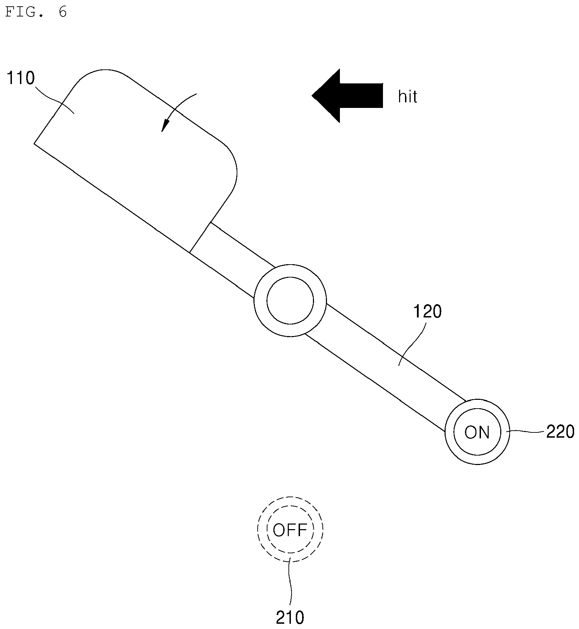

In the present invention, the game is set by switching on a power button on a rear surface of the punching game apparatus. Here, the present invention can select a mute mode in which no sound is produced and a normal mode in which sound is produced. Then, the power is on and both of the lamps, i.e., the first lamp 610 and the second lamp 620 are turned on. At the same time, sound indicating the start of the game is produced from a speaker. In the case of selecting the mute mode, no sound is produced from the speaker. Referring to Fig. 3, when the game is started, the shaft 120 is positioned at one region, i.e., at the first sensor 210. At this time, the control unit 300 receives the first sensor information from the first sensor 210 and detects that the shaft 120 is positioned at one region. However, the second sensor information from the second sensor 220 is not received. Then, if the impact is applied to the punching pad 110 as shown in Fig. 4, the punching pad 110 is bent backwards and the shaft 120 moves forward, as shown in Fig. 5. At this time, the shaft 120 is detected neither by the first sensor 210 nor the second sensor 220. Then, if the punching pad 110 is completely bent backwards as shown in Fig. 6, the shaft 120 is detected only by the second sensor 220 not by the first sensor 210. At this time, the second sensor 220 outputs the second sensor information. The moving time of the shaft 120 from the first sensor 210 to the second sensor 220 can be measured based on the first sensor information and the second sensor information. The measured moving time is converted into a score and displayed. The converted score is also displayed on the lamp. When the score is high, the lamp is turned on from the lower side upto the upper side and when the score is low, the lamp is turned on only at the lower side. In other words, the lamp is turned on from the lower side upto the upper side in proportion to the converted score. In the normal mode, the sound corresponding to the score is produced from the speaker depending on the score.

The present invention is provided with a restart button 500 at a front side of the punching game apparatus. When the restart button 500 is pushed, the hitting part 100 is immediately returned to the original position and the game can be restarted easily.

As described above, the present invention can accurately score a user's hitting power by converting a moving time of a shaft at the time of hitting into a score by using a sensor, thereby increasing the interest in a game. Further, the present invention can accumulate the scores converted from the hitting power and allow users to compete for the highest score through score recording, thereby increasing the interest in a game. Moreover, the present invention allows a game to be played with a hitting power of a finger, unlike conventional punching game apparatuses. Accordingly, the punching game apparatus of the present invention is small in size and thus easy to carry. Since a conventional punching game can be played with a finger, the interest in the game can be stirred up. Furthermore, the present invention is provided with a restart button so that a game can be easily restarted.

While the present invention has been shown and described with respect to the embodiments, it will be understood by those skilled in the art that various changes and modifications may be made without departing from the scope of the present invention as defined in the following claims.

## Claims

1. A punching game apparatus comprising:
a hitting part to which a hitting power from a user's finger is applied;
a sensor unit configured to output a first sensor information when the hitting part is positioned at one point and output a second sensor information when the hitting part is positioned at the other point by the hitting power; and
a control unit configured to convert a difference between an output time of the first sensor information and an output time of the second sensor information into a score.

2. The punching game apparatus of claim 1, wherein the hitting part includes:
a punching pad to which the hitting power is applied,
a shaft connected to the punching pad,
wherein the shaft has a linear shape or a bent bracket shape.

3. The punching game apparatus of claim 2, wherein the sensor unit includes:
a first sensor configured to detect that the shaft is positioned at one point; and
a second sensor configured to detect that the shaft is positioned at the other point.

4. The punching game apparatus of claim 3, wherein the sensor unit includes an infrared ray sensor.

5. The punching game apparatus of claim 4, further comprising:
a restart button configured to return the hitting part to an original position.

6. The punching game apparatus of claim 4, wherein the control unit is further configured to accumulate converted scores and display the accumulated scores on a display unit.
